Europäisches Patentamt
European Patent Office
Office européen des brevets

(11) Numéro de publication: 0 286 539
A1

# DEMANDE DE BREVET EUROPEEN

(21) Numéro de dépôt: 88400837.6

(22) Date de dépôt: 07.04.88

(51) Int. Cl.⁴: G 02 F 1/137
G 02 F 1/133

(30) Priorité: 10.04.87 FR 8705134

(43) Date de publication de la demande:
12.10.88 Bulletin 88/41

(84) Etats contractants désignés:
CH DE GB IT LI NL

(71) Demandeur: COMMISSARIAT A L'ENERGIE ATOMIQUE
31/33, rue de la Fédération
F-75015 Paris (FR)

(72) Inventeur: Dijon, Jean
3, rue Commandant Bulle
F-38100 Grenoble (FR)

Ebel, Christine
10, Quai de France
F-38000 Grenoble (FR)

(74) Mandataire: Mongrédien, André et al
c/o BREVATOME 25, rue de Ponthieu
F-75008 Paris (FR)

## (54) Dispositif d'affichage à cristal liquide smectique ferroélectrique bistable.

(57) Dispositif d'affichage à cristal liquide smectique ferroélectrique bistable.

Ce dispositif comprend une cellule étanche (6a) intercalée entre deux polariseurs (2a, 4a) formée de deux parois en verre (10a, 12a) pourvues chacune d'une électrode (16a, 18a) apropriée à l'affichage, reliée à une source d'alimentation électrique (24a) servant à appliquer à un film de cristal liquide smectique ferroélectrique chiral (20a), intercalé entre les électrodes, un champ électrique destiné à la commande du cristal liquide. Pour obtenir une bistabilité et une mémorisation de ce cristal liquide, l'une des parois est recouverte par un matériau (25) réalisé par l'empilement d'une couche de silice (33), d'une couche de polyimide (35), d'un film (37) d'organosilane éventuellement frotté, en contact avec le cristal liquide, et l'autre paroi est pourvue d'un film de silice (39) recouvert d'un film (27) de Nylon.

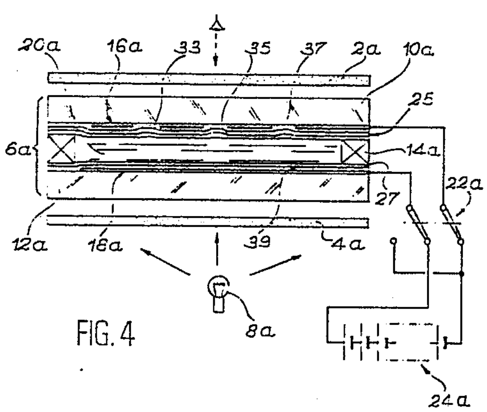


FIG. 4

EP 0 286 539 A1

**Description**

**DISPOSITIF D'AFFICHAGE A CRISTAL LIQUIDE SMECTIQUE FERROELECTRIQUE BISTABLE**

La présente invention a pour objet un dispositif d'affichage à cristal liquide ferroélectrique présentant une phase smectique chirale. Elle trouve une application en optoélectronique, et principalement dans l'affichage binaire d'images complexes ou analogiques ou dans l'affichage de caractères alpha-numériques.

Bien que l'invention s'applique à tout type de cristaux liquides chiraux smectiques C, I, F, G ou H inclinés (tilted en terminologie anglo-saxonne), celle-ci se rapporte plus spécialement aux cristaux liquides à phase smectique C chirale.

Dans le document EP-A-O 032 362, il est décrit un dispositif d'affichage dont le matériau d'affichage électro-optique est un cristal liquide à phase smectique C chirale.

Ce dispositif d'affichage, représenté schématiquement en coupe longitudinale sur la figure 1, comporte un premier polariseur linéaire 2 et un second polariseur linéaire 4 croisés entre lesquels est intercalée une cellule d'affichage 6, étanche. Une source de lumière 8, située en dessous du polariseur 4, permet un éclairage de la cellule 6.

Cette cellule d'affichage fonctionnant en transmission est formée de deux parois isolantes transparentes 10 et 12, généralement en verre. Ces parois, parallèles entre elles, sont rendues solidaires par leurs bords au moyen d'une soudure 14 servant de joint d'étanchéité.

Les parois 10 et 12 sont recouvertes respectivement d'une électrode 16 et d'une contre-électrode 18 de forme appropriée à l'affichage, réalisées en un matériau conducteur transparent. L'électrode et la contre-électrode sont en particulier formées chacune de bandes conductrices parallèles, les bandes de l'électrode et les bandes de la contre-électrode étant croisées.

Ces électrode et contre-électrode permettent d'appliquer aux bornes d'un film de cristal liquide 20 à phase smectique C chirale, contenu dans la cellule 6, un champ électrique $\vec{E}$ continu dont on peut modifier le sens ou la polarité. A cet effet, l'électrode 16 et la contre-électrode 18 sont reliées, par l'intermédiaire d'un inverseur 22, à une source d'alimentation électrique continue 24.

Sur la figure 2, on a représenté, à l'échelle moléculaire, la structure d'un film de cristal liquide à phase smectique C, lorsque celui-ci est contenu dans la cellule d'affichage 6. En vue de simplifier cette figure 2, on n'a représenté que les parois 10 et 12 de la cellule. La paroi inférieure 12 constitue par exemple un plan de référence contenant les deux axes X et Y d'un repère XYZ orthogonal.

Le film de cristal liquide smectique C est composé de molécules 26 de forme allongée, présentant un axe longitudinal 28, disposées en couches 30. Ces molécules présentent chacune un moment dipolaire permanent $\vec{p}$ perpendiculaire à leur axe longitudinal 28.

Dans le cas idéal, représenté sur la figure 2, les couches smectiques 30 sont toutes parallèles entre elles et orientées perpendiculairement aux parois 10 et 12 de la cellule.

Lorsque l'on applique un champ électrique $\vec{E}$ à un tel cristal liquide, on obtient un fort couplage entre l'orientation moléculaire (axe longitudinal 28 des molécules) et ce champ électrique $\vec{E}$ du fait de la présence du dipôle permanent. Ce couplage est de type polaire car le dipôle électrique s'oriente préférentiellement selon une direction parallèle au champ électrique. Le changement de polarité du champ électrique permet donc de changer l'orientation du dipôle électrique et donc l'orientation des molécules 26.

Sur la figure 2, on a représenté en traits pleins les molécules 26 du cristal liquide selon une première orientation $A_1$ (état 1) formant un angle $-\theta$ par rapport à la direction X, les moments dipolaires $\vec{p}$ étant orientés perpendiculairement aux parois 10 et 12 de la cellule et dans le sens 10-12 du champ électrique $\vec{E}$. Le changement de polarité du champ électrique permet le basculement des moments dipolaires $\vec{p}$ dans le sens 12-10 entraînant un pivotement des molécules autour de l'axe Z d'un angle de $2\theta$. La seconde orientation $A_2$ des molécules (état 2) est symbolisée en traits mixtes. Elle forme un angle $+\theta$ par rapport à la direction X.

Les molécules passent de la première à la seconde orientations, et inversement, en décrivant un cône d'angle au sommet $2\theta$ caractéristique du matériau (typiquement $\theta = 22,5°$).

Sur la figure 2, on a aussi représenté les directions de polarisation P et P' respectivement des polariseurs rectilignes 2 et 4.

Lorsque ces deux polariseurs sont croisés et lorsque dans l'état 1 les molécules 26 du cristal liquide sont parallèles à la direction de polarisation P' du polariseur 4, l'état optique 1 du cristal liquide correspond à l'absorption de la lumière provenant de la source 8 et l'état optique 2 à la transmission de cette même lumière.

Les cristaux liquides à phase smectique C chirale, orientés convenablement (figure 2), peuvent donc être utilisés comme matériaux d'affichage. Ils sont susceptibles, en plus de leur bistabilité de montrer des propriétés intéressantes telles qu'un temps de réponse ou de commutation rapide, de l'ordre de la microseconde, pour des tensions faibles appliquées aux électrodes (quelques volts) et une large réponse électro-optique.

Malheureusement, les dispositifs d'affichage actuellement connus utilisant comme matériau d'affichage un cristal liquide à phase smectique chirale (H ou C) présentent un certain nombre de difficultés de réalisations liées principalement à la présence du moment dipolaire permanent des molécules.

En effet, en l'absence de champ électrique, les moments dipolaires des molécules du cristal liquide interagissent avec les dipôles des parois 10 et 12 de la cellule, et éventuellement avec ceux des électrodes. Ceci peut entraîner, dans le cas de deux parois identiques à faible tension superficielle, la disposition en hélice

des molécules dans chaque couche smectique 30 comme représenté sur la figure 3 ; la première molécule $26_1$ de chaque couche smectique 30 orientée suivant $A_2$, en contact avec la paroi 10 de la cellule, et la dernière molécule $26_n$ de ces mêmes couches orientée suivant $A_1$, en contact avec la paroi 12 de la cellule, sont décalées d'un angle 2θ.

Cette orientation caractérisée par une torsion des molécules dans chaque couche smectique 30 est stable en l'absence du champ électrique ; ce cristal liquide ne présente pas d'effet mémoire puisqu'une orientation donnée des molécules (état 1 ou 2), en présence d'un champ électrique, ne peut être conservée lorsque l'on supprime ce champ. Cette configuration moléculaire en hélice ne permet pas de réaliser des dispositifs d'affichage à mémoire interne.

En outre, une orientation homogène de toutes les molécules du cristal liquide est difficile à obtenir pour des cellules d'affichage de grandes dimensions.

La présente invention a justement pour objet un dispositif d'affichage à cristal liquide ferroélectrique permettant de remédier aux différents inconvénients donnés ci-dessus. Ce dispositif permet en particulier de préserver la bistabilité du matériau d'affichage, en l'absence de champ électrique, et d'obtenir une orientation homogène des molécules du cristal liquide compatible avec un grand nombre de cristaux liquides d'une part, et d'autre part avec des cellules d'affichage de grandes dimensions.

De façon plus précise, l'invention a pour objet un dispositif d'affichage à cristal liquide comprenant une cellule étanche intercalée entre deux polariseurs rectilignes croisés, formée d'une première et d'une seconde parois isolantes dont l'une au moins est transparente, ces parois étant revêtues respectivement d'une première et d'une seconde électrodes de forme appropriée à l'affichage entre lesquelles est intercalé un film de cristal liquide smectique ferroélectrique, formé de couches smectiques parallèles, constituées chacune de molécules chirales comportant un axe longitudinal et un moment dipolaire orienté perpendiculairement à cet axe, la première et la dernière molécules de chaque couche smectique étant situées respectivement en regard de la première et de la seconde parois, et des moyens pour créer entre la première et la seconde électrodes un champ électrique destiné à orienter le moment dipolaire des molécules du cristal liquide, ce dispositif étant caractérisé en ce que la première paroi est revêtue d'un premier matériau susceptible d'orienter, indépendamment du sens du champ électrique créé entre les électrodes, l'axe longitudinal des molécules selon une première direction formant un angle $\underline{t}$ par rapport à un plan parallèle aux parois et dont la projection dans ce plan forme avec une seconde direction contenue dans ce plan un angle nul, et en ce que la seconde paroi est revêtue d'un second matériau susceptible d'orienter l'axe longitudinal des molécules selon une troisième direction parallèle audit plan et dont la projection dans ce plan forme avec la seconde direction un angle voisin de +θ ou -θ suivant le sens du champ électrique créé entre les électrodes.

Plus la force d'ancrage des parois de la cellule est grande, c'est-à-dire plus l'interaction des parois de la cellule avec les moments dipolaires des molécules est grande, plus la durée de commutation d'un état optique à l'autre des molécules, lorsque l'on change la polarité du champ électrique, est grande. Or, cette force d'ancrage des parois de la cellule, nécessaire pour avoir une orientation homogène des couches smectiques du cristal liquide, doit être la plus faible possible pour avoir une commutation rapide, d'un état optique à l'autre, lorsque l'on change le sens du champ électrique.

Ce compromis est réalisé, selon l'invention, grâce à l'utilisation de parois dissymétriques de la cellule.

Le fait de rendre dissymétriques les deux parois de la cellule permet de ne faire intervenir qu'une seule de ces parois pour la commutation d'un état optique à l'autre du cristal liquide.

En effet, le premier matériau assurant un ancrage fort et incliné des molécules sur la première paroi de la cellule, ne leur confère qu'un seul état stable hors champ alors que le deuxième matériau assurant un ancrage faible des molécules sur la seconde paroi de la cellule permet de faire pivoter les molécules autour du cône d'angle au sommet 2θ sous l'effet d'un champ électrique.

Le premier matériau permet l'orientation homogène des couches smectiques, parallèlement entre elles et sensiblement perpendiculaires aux parois de la cellule. Il assure, indépendamment du sens du champ électrique, un alignement homéotrope incliné (tilted), c'est-à-dire que l'angle $\underline{t}$ est tel que $0 <; t \leqq \theta$ et préférentiellement $t \simeq \theta$.

Le second matériau permet une orientation planaire des molécules, c'est-à-dire une orientation parallèle aux parois de la cellule, les moments dipolaires de ces molécules étant alors perpendiculaires auxdites parois. Il permet leur commutation d'un état 1 à un état 2 suivant le sens du champ électrique.

Afin d'obtenir un contraste suffisant de l'affichage, la direction de polarisation de l'un des deux polariseurs est disposée avantageusement parallèlement à la troisième direction.

Lorsque la direction de polarisation de ce polariseur forme avec la troisième direction un angle voisin de 0°, l'orientation des molécules selon cette direction de polarisation correspond à l'absorption de la lumière (point noir) et le pivotement des molécules d'un angle de 2θ, lorsque l'on modifie le sens du champ électrique, correspond au second état optique du cristal liquide et à la transmission de la lumière (point clair).

Afin de favoriser l'orientation correcte des molécules, le premier matériau présente une surface anisotrope au contact du film de cristal liquide.

Selon l'invention, le premier matériau est réalisé en tout matériau (polymère par exemple) assurant un ancrage fort et un alignement homéotrope incliné des molécules du cristal liquide. De façon avantageuse, le premier matériau comprend un film d'un organosilane à longue chaîne, substitué ou non, ou d'un mélange d'organosilanes à longue chaîne, éventuellement frotté pour assurer une anisotropie. Les organosilanes à longue chaîne utilisables dans l'invention comprennent de 1 à 2 atomes de silicium, de 11 à 30 atomes de

carbone. Les substituants sont en particulier des groupements amine, alcoxy, fluor, alkyle, époxy.

De préférence, on utilise comme organosilane à longue chaîne, l'octadécyl-triéthoxysilane (ODS), le diméthyl-octadécyl-aminopropylsilane (DMOAP) et leurs mélanges. Ces organosilanes à longue chaîne peuvent être mélangés à un ou plusieurs organosilanes à courte chaîne comprenant de 1 à 2 atomes de silicium, de 1 à 10 atomes de carbone comme le N-méthyl-aminotriméthoxysilane (MAP) ou le diméthoxyméthylchlorosilane.

Avantageusement, ce ou ces organosilanes sont déposés sur une couche de silice ou une couche polymérique, éventuellement frottée. Selon l'invention, le polymère doit être susceptible de former des liaisons chimiques avec le ou les organosilanes utilisés, c'est-à-dire susceptible d'absorber le ou les organosilanes utilisés. A cet effet, on utilise par exemple comme polymère un polyimide qui, par la présence de ses atomes d'oxygène, peut former des liaisons Si-O avec les silanes. Il en est de même pour la silice. Il est aussi possible de déposer le film d'organosilane sur une couche polymérique, éventuellement frottée et supportée par une couche de $SiO_2$.

Le second matériau peut être réalisé en tout matériau assurant un ancrage faible et planaire des molécules du cristal liquide. Ce second matériau est avantageusement un film polymérique ou un film minéral tel que de la silice, de l'oxyde d'indium ou de l'oxyde d'indium et d'étain (ITO) éventuellement recouvert d'un organosilane à chaîne courte du type de ceux donnés précédemment ou bien ayant un groupement benzène, toluène, benzyle ou vinyle. Comme polymère utilisable, on peut citer les polyamides, les polyimides, les polyvinylalcools et les polybutyltéréphtalates.

De préférence, le second matériau est un film de polyamide et en particulier de Nylon®.

Lorsque l'on utilise une couche d'ITO comme premier matériau, cette couche peut être gravée de façon appropriée à l'affichage et jouer aussi le rôle de la première électrode.

D'autres caractéristiques et avantages de l'invention ressortiront mieux de la description qui va suivre, donnée à titre illustratif et non limitatif.

La description se réfère aux figures annexées, dans lesquelles :

- la figure 1, déjà décrite, représente schématiquement, en coupe longitudinale, un dispositif d'affichage à cristal liquide smectique, conforme à l'art antérieur ;
- la figure 2, déjà décrite, représente schématiquement la structure d'un cristal liquide smectique C chiral en couche mince ainsi que les orientations possibles des molécules de ce cristal liquide, suivant la polarité du champ électrique qui lui est appliquée ;
- la figure 3, déjà décrite, illustre l'orientation défavorable des molécules d'un film de cristal liquide dans une cellule conforme à l'art antérieur, en l'absence de champ électrique ;
- la figure 4 représente schématiquement, en coupe longitudinale, un dispositif d'affichage conforme à l'invention ;
- les figures 5a et 5b illustrent les deux orientations possibles des molécules d'un cristal liquide smectique C utilisé dans le dispositif de la figure 4, suivant la polarité du champ électrique appliquée au cristal liquide ; et
- la figure 6 représente schématiquement une variante de la paroi supérieure de la cellule d'affichage illustrée sur la figure 4.

En référence à la figure 4, le dispositif d'affichage selon l'invention comprend, comme les dispositifs d'affichage de l'art antérieur, deux polariseurs rectilignes croisés 2a et 4a, disposés de part et d'autre d'une cellule d'affichage 6a éclairée par une source lumineuse 8a.

La cellule 6a est pourvue de deux parois isolantes 10a et 12a par exemple en verre, maintenues écartées l'une de l'autre et soudées par leurs bords par une soudure 14a servant de joint d'étanchéité.

Les parois 10a et 12b sont pourvues respectivement d'électrodes 16a et 18a, chaque électrode ayant la forme de bandes conductrices parallèles entre elles, et les bandes conductrices de l'électrode 16a sont perpendiculaires à celles de l'électrode 18a. Chaque croisement de deux bandes conductrices respectivement de l'électrode 16a et de l'électrode 18a définit un point élémentaire d'affichage. Les bandes conductrices de ces électrodes sont en particulier réalisées en oxyde d'indium ou en oxyde d'indium et d'étain (ITO).

Ces électrodes sont reliées, via un commutateur 22a à une source d'alimentation électrique 24a en vue d'appliquer un champ électrique aux bornes du film 20a de cristal liquide contenu dans la cellule étanche 6a et intercalé entre les électrodes 16a et 18a.

Selon l'invention, le cristal liquide utilisé est un cristal liquide smectique C pourvu de molécules chirales, présentant des propriétés ferroélectriques et des propriétés électro-optiques telles qu'une biréfringence modifiable électriquement. En outre, les molécules présentent un moment dipolaire permanent.

Ce cristal liquide présente au moins, à la température de fonctionnement $T_1$ de la cellule d'affichage 6a, une phase smectique C chirale, à une température $T_2$ supérieure à la température d'utilisation de la cellule, une phase smectique A et, à une température $T_3$ supérieure à la température $T_2$, une phase isotrope.

Le remplissage de la cellule se fait de façon classique, sous vide, mais à une température supérieure à $T_3$ afin de faciliter le remplissage de la cellule. En effet, en phase smectique, les cristaux liquides utilisés sont relativement visqueux alors que, en phase isotrope, ils sont très fluides.

Outre l'existence d'une phase smectique A entre la phase smectique C et la phase isotrope, les cristaux liquides utilisables dans l'invention peuvent présenter une phase nématique entre la phase smectique A et la phase isotrope.

Comme exemple de cristal liquide utilisable dans l'invention, on peut citer la composition, en volume,

suivante :

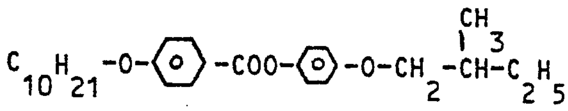 15%

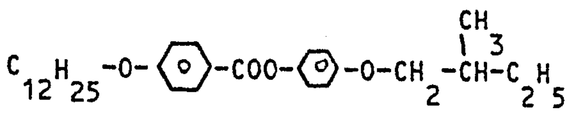 30%

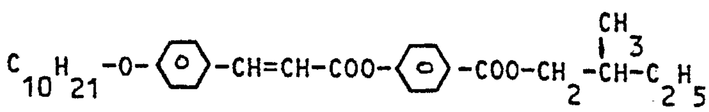 15%

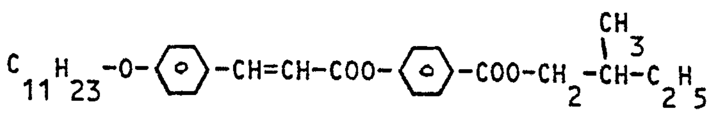 15%

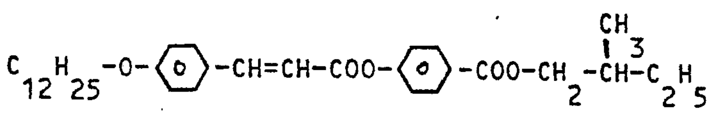 25%

Ce cristal liquide ferroélectrique présente une phase smectique C chirale jusqu'à 50°C, une phase smectique A jusqu'à 78°C où il devient isotrope. Avec un tel cristal liquide, le remplissage de la cellule peut être réalisé en chauffant cette dernière à 90°C.

Afin d'obtenir une bonne commutation de toutes les molécules du cristal liquide entre les deux états optiques avec un bon contraste et un bon effet mémoire, les surfaces internes des parois 10a et 12a sont pourvues respectivement d'un premier matériau 25 et d'un second matériau 27 différents, en contact avec le film de cristal liquide 20a.

Le matériau 25 sert à orienter collectivement les couches smectiques 30a, parallèlement entre elles et selon la direction Z perpendiculaire aux parois 10a et 12a de la cellule d'affichage.

Ce matériau 25, comme représenté sur les figures 5a et 5b, sert à limiter, lors de l'application d'un champ électrique $\vec{E}$ entre les électrodes 16a et 18a de la cellule, le pivotement des molécules 26a du cristal liquide autour de l'axe Z. En outre, ce matériau 25 sert à orienter l'axe longitudinal 28a des molécules selon une direction X' inclinée par rapport à la surface du matériau 25, et par conséquent par rapport à la paroi supérieure 10a de la cellule, et dont la projection dans le plan XY est sensiblement parallèle à la direction X ; l'axe longitudinal 28a des molécules formant un angle t avec le matériau 25 qui est inférieur ou égal à l'angle θ caractéristique du cristal liquide utilisé.

En outre, ce matériau 25 sert à orienter les molécules du cristal liquide afin que leur moment dipolaire $\vec{p}$ soit parallèle à la surface du matériau 25 et par conséquent parallèle aux parois 10a et 12a de la cellule.

A l'inverse du matériau 25, le matériau 27 assure un ancrage faible et planaire des molécules 26a du cristal liquide. Il sert à orienter les molécules 26a de sorte que leur axe longitudinal 28a soit parallèle à la surface du matériau 27, et par conséquent parallèle aux parois 10a et 12a de la cellule, et de sorte que les moments dipolaires $\vec{p}$ des molécules soit perpendiculaires à la surface du matériau 27 et par conséquent perpendiculaires auxdites parois.

En outre, contrairement au matériau 25, le matériau 27 permet un pivotement des molécules autour de l'axe Z, lorsque l'on applique un champ électrique aux bornes du film de cristal liquide, l'angle de pivotement étant de 2θ.

La figure 5a représente la première orientation $A_1$ possible des molécules dans chaque couche smectique 30a, après l'application d'un champ électrique orienté du matériau 25 vers le matériau 27, et la figure 5b la seconde orientation $A_2$ possible de ces molécules lorsque l'on a inversé le sens du champ électrique. L'orientation $A_1$ forme un angle -θ par rapport à la direction X et l'orientation $A_2$ un angle +θ par rapport à X. Ces deux orientations sont stables. Le cristal liquide présente alors un effet mémoire.

Compte tenu des propriétés d'orientation différentes des matériaux 25 et 27, et de leur action simultanée sur les molécules de chaque couche smectique 30a, l'angle entre la direction X' des molécules et l'axe X augmente continuement du matériau 25 au matériau 27 jusqu'à être égal à θ. L'angle d'inclinaison des molécules 26a par rapport aux parois 10a, 12a varie continuement de t à 0 du matériau 25 au matériau 27, t

étant caractéristique du matériau 25.

Autrement dit, seule la dernière molécule $26a_n$ de chaque couche smectique, en contact direct avec le matériau 27, est orientée dans le plan XY, soit parallèlement aux parois 10a et 12a, et seule la première molécule $26a_1$ de chaque couche smectique est orientée selon la direction X′ dont la projection dans la plan XY forme un angle voisin de 0° avec l'axe X.

En conclusion, les molécules dans chaque couche smectique sont orientées suivant une portion d'hélice.

De même, l'orientation des moments dipolaires des molécules de chaque couche smectique varie continuement du matériau 25, où ils sont parallèles aux parois de la cellule, au matériau 27, où ils sont perpendiculaires auxdites parois.

Afin d'obtenir un bon contraste entre les deux états optiques du cristal liquide, la direction de polarisation P′ du polariseur 4a est orientée parallèlement à la direction $A_1$ ou $A_2$ alors que la direction de polarisation P du polariseur 2a est perpendiculaire à la direction P′. Lorsque la direction de polarisation P′ est orientée, comme représenté sur les figures 5a et 5b, le premier état optique $A_1$ correspond à l'absorption de la lumière provenant de la source 8a et le second état optique $A_2$ correspond à la transmission de cette même lumière. Autrement dit, le premier état optique correspond à un affichage noir et le second état optique à un affichage blanc.

On va maintenant donner différents exemples de réalisation des matériaux 25 et 27 de la cellule selon l'invention.

Exemple 1

En référence à la figure 4, le matériau 25, disposé sur la surface interne d'une électrode 16a en ITO, est formé successivement d'une couche de silice 33, de 75 nanomètres d'épaisseur environ, d'une couche de polyimide frotté 35, de 75 nanomètres d'épaisseur environ, et d'un film 37 de DMOAP frotté au contact direct du film de cristal liquide 20a. Le dépôt du DMOAP est assuré en trempant la paroi 10a, pourvue de ces électrodes et des couches de silice et de polyimide, dans une solution de DMOAP.

Dans cet exemple, la couche de silice 33, déposée en phase vapeur, assure un rôle électrique, lors de l'application du champ électrique servant à commander le cristal liquide, tout en contribuant avec la couche de polyimide et le film de DMOAP à l'orientation appropriée des molécules, comme représenté sur les figures 5a et 5b.

Le matériau 27 est formé d'un film de Nylon 6® de 150 nanomètres d'épaisseur. Ce film 27 de Nylon®6, au contact du film de cristal liquide 20a, est supporté par une couche de silice 39, de 75 nanomètres d'épaisseur, utilisée uniquement pour ses propriétés de diélectrique lors de la commande du dispositif d'affichage.

Le cristal liquide 20a utilisé est en particulier celui décrit précédemment. Il commute de l'état 1 (figure 5a) à l'état 2 (figure 5b), avec mémorisation, lorsque l'on applique entre les électrodes 16a et 18a une différence de potentiel de 7 volts pendant une milliseconde.

Exemple 2

Dans cet exemple, le matériau 25 se différencie par rapport à celui de l'exemple 1 par l'utilisation d'un film 37 en un mélange d'organosilanes frotté, contenant du MAP et de l'ODS avec un rapport volumique de MAP/ODS = 3 ; les couches 33, 35 et 27 sont identiques à celles de l'exemple 1.

Exemple 3

En référence à la figure 6, le matériau 25a recouvrant l'électrode 16a de la cellule d'affichage est constitué d'une couche 41 de silice déposée en phase vapeur, de 75 nanomètres d'épaisseur, recouverte d'un film 43 de DMOAP frotté.

Le matériau 27 associé à ce matériau 25a est un film de Nylon 6.6®.

Exemple 4

Cet exemple se différencie de l'exemple 1 par l'utilisation d'un film 37 en un mélange d'organosilanes contenant du MAP et du DMOAP dans un rapport volumique MAP/DMOAP = 3, les couches 33 et 35 étant les mêmes que celles de l'exemple 1. En outre, le matériau 27 est un film de Nylon 6®.

Exemple 5

Cet exemple se différencie de l'exemple 3 par l'utilisation d'une couche 41 de silice présentant en surface une multitude de crans obliques et recouverte d'un film 43 de DMOAP. Cette couche 41, de 75 nm d'épaisseur est déposée par évaporation sous vide comme décrit dans le document FR-A-8417794. Elle assure, du fait de son anisotropie, un fort angle d'inclinaison t des molécules du cristal liquide qui sont en contact avec sa surface.

Le matériau 27 est alors un film de Nylon 6® non frotté.

Exemple 6

Dans cet exemple le matériau 27 est constitué uniquement d'un film d'or de 10 nm d'épaisseur, gravé sous forme de bandes parallèles, les bandes d'or recouvrant, en coïncidence, les bandes conductrices de l'électrode 16a.

Le matériau 25 est identique à celui décrit dans l'exemple 1.

La description donnée précédemment n'a bien entendu été donnée qu'à titre illustratif, toutes modifications sans pour autant sortir du cadre de l'invention pouvant être envisagées.

**Revendications**

1. Dispositif d'affichage à cristal liquide comprenant une cellule étanche (6a) intercalée entre deux polariseurs rectilignes croisés (2a, 4a), formée d'une première (10a) et d'une seconde (12a) parois isolantes dont l'une au moins est transparente, ces parois étant revêtues respectivement d'une première (16a) et d'une seconde (18a) électrodes de forme appropriée à l'affichage entre lesquelles est intercalé un film de cristal liquide (20a) smectique ferroélectrique, formé de couches smectiques (30a) parallèles, constituées chacune de molécules chirales (26a) comportant un axe longitudinal (28a) et un moment dipolaire ($\vec{p}$) orienté perpendiculairement à cet axe, la première et la dernière molécules de chaque couche smectique (30a) étant situées respectivement en regard de la première (10a) et de la seconde (12a) parois, et des moyens (24a) pour créer entre la première et la seconde électrodes un champ électrique ($\vec{E}$) destiné à orienter le moment dipolaire des molécules du cristal liquide, ce dispositif étant caractérisé en ce que la première paroi (10a) est revêtue d'un premier matériau (25, 25a) susceptible d'orienter, indépendamment du sens du champ électrique créé entre les électrodes, l'axe longitudinal (28a) des molécules (26a) selon une première direction (X') formant un angle t par rapport à un plan (XY) parallèle aux parois et dont la projection (X) dans ce plan forme avec une seconde direction (X) contenue dans ce plan un angle voisin de 0°, et en ce que la seconde paroi (12a) est revêtue d'un second matériau (27) susceptible d'orienter l'axe longitudinal (28a) des molécules selon une troisième direction ($A_1$, $A_2$) parallèle audit plan (XY) et dont la projection dans ce plan forme avec la seconde direction (X) un angle voisin de $+\theta$ ou $-\theta$ suivant le sens du champ électrique créé entre les électrodes (16a, 18a).

2. Dispositif d'affichage selon la revendication 1, caractérisé en ce que l'angle t est tel que $0 < ;t \leq \theta$.

3. Dispositif d'affichage selon la revendication 1 ou 2, caractérisé en ce que la direction de polarisation (P') de l'un des deux polariseurs (6a) est orientée parallèlement à la troisième direction ($A_1$).

4. Dispositif d'affichage selon l'une quelconque des revendications 1 à 3, caractérisé en ce que le premier (25, 25a) matériau présente, au contact du film de cristal liquide (20a), une surface anisotrope.

5. Dispositif d'affichage selon l'une quelconque des revendications 1 à 4, caractérisé en ce que le premier matériau (25, 25a) comprend un film (37, 43) d'au moins un organosilane à longue chaîne, substitué ou non, éventuellement frotté, en contact avec le film de cristal liquide (20a).

6. Dispositif d'affichage selon la revendication 5, caractérisé en ce que le premier matériau (25, 25a) comprend un film d'un mélange d'un organosilane à longue chaîne et d'un organosilane à courte chaîne.

7. Dispositif d'affichage selon la revendication 5 ou 6, caractérisé en ce que le film d'organosilane (37, 43) est déposé sur une couche de silice (33, 41) et/ou une couche (35) en un polymère éventuellement frotté susceptible de former des liaisons chimiques avec l'organosilane.

8. Dispositif d'affichage selon la revendication 7, caractérisé en ce que le polymère est un polyimide.

9. Dispositif d'affichage selon l'une quelconque des revendications 5 à 8, caractérisé en ce que l'organosilane à longue chaîne est choisi parmi l'octadécyl-triéthoxysilane (ODS), le diméthyl-octadécyl-aminopropylsilane (DMOAP) et leurs mélanges.

10. Dispositif d'affichage selon l'une quelconque des revendications 1 à 9, caractérisé en ce que le second matériau (27) est un film d'un matériau choisi parmi un polymère, de la silice, de l'oxyde d'indium, et de l'oxyde d'indium et d'étain éventuellement recouvert d'un film d'au moins un organosilane à chaîne courte.

11. Dispositif d'affichage selon la revendication 10, caractérisé en ce que le second matériau (27) est un polyamide.

12. Dispositif d'affichage selon la revendication 10, caractérisé en ce que le second matériau (27) est du Nylon.

13. Dispositif d'affichage selon la revendication 6 ou 10, caractérisé en ce que l'organosilane à chaîne courte est le N-méthyl-aminotriméthoxysilane (MAP).

14. Dispositif d'affichage selon l'une quelconque des revendications 1 à 13, caractérisé en ce que le cristal liquide comprend une phase smectique C chirale à la température $T_1$ de fonctionnement de la cellule (6a), une phase smectique A à une température $T_2 > ;T_1$ et une phase isotrope à une température $T_3 > ;T_2$.

0286539

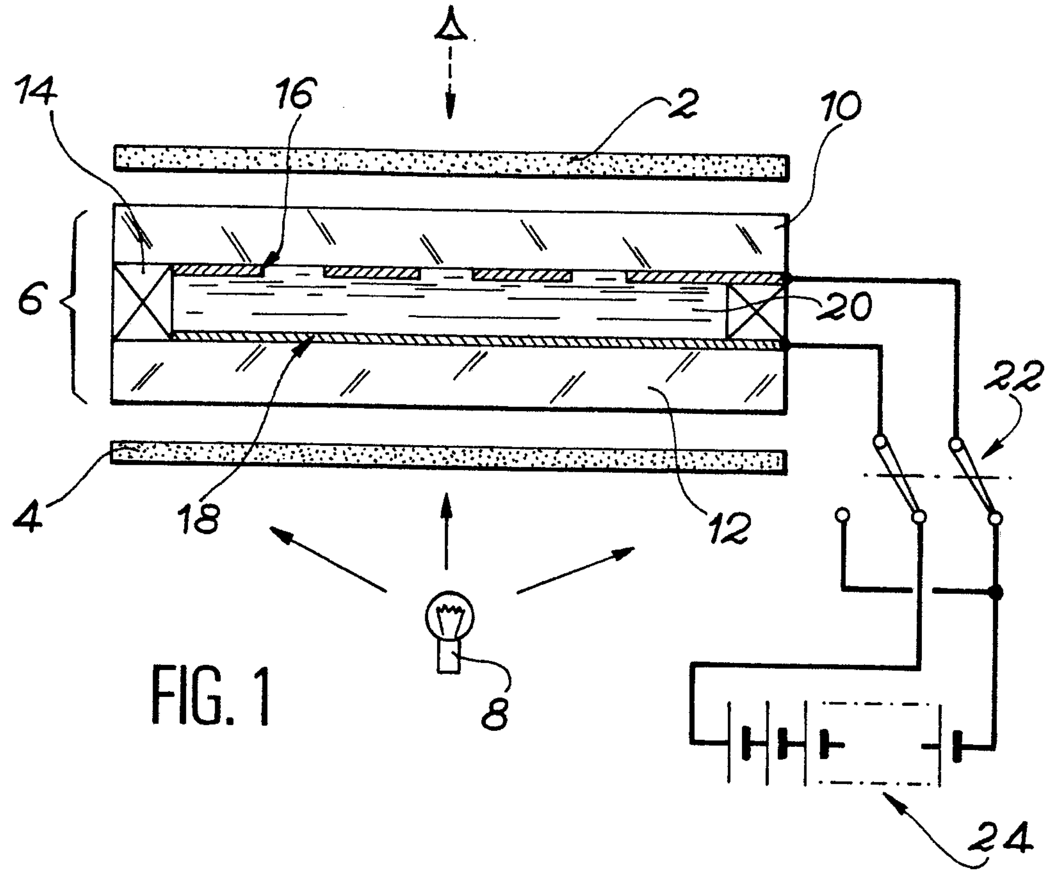


FIG. 1

FIG. 2

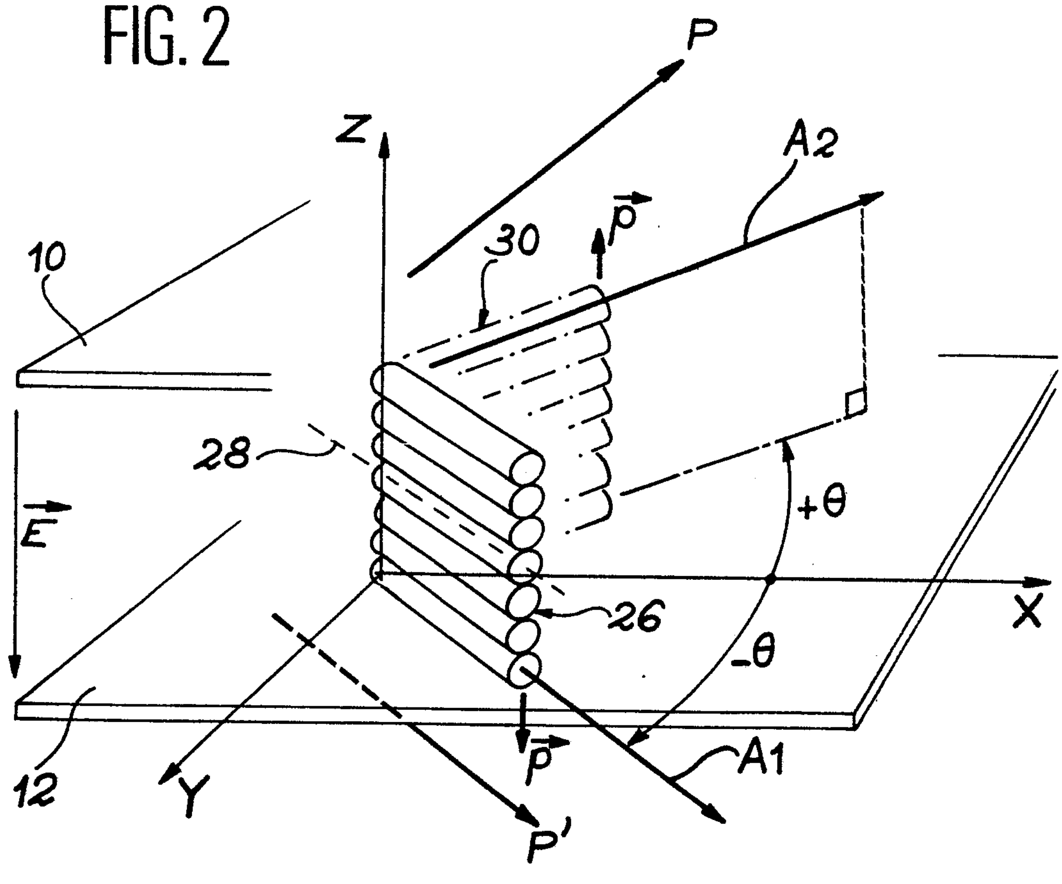

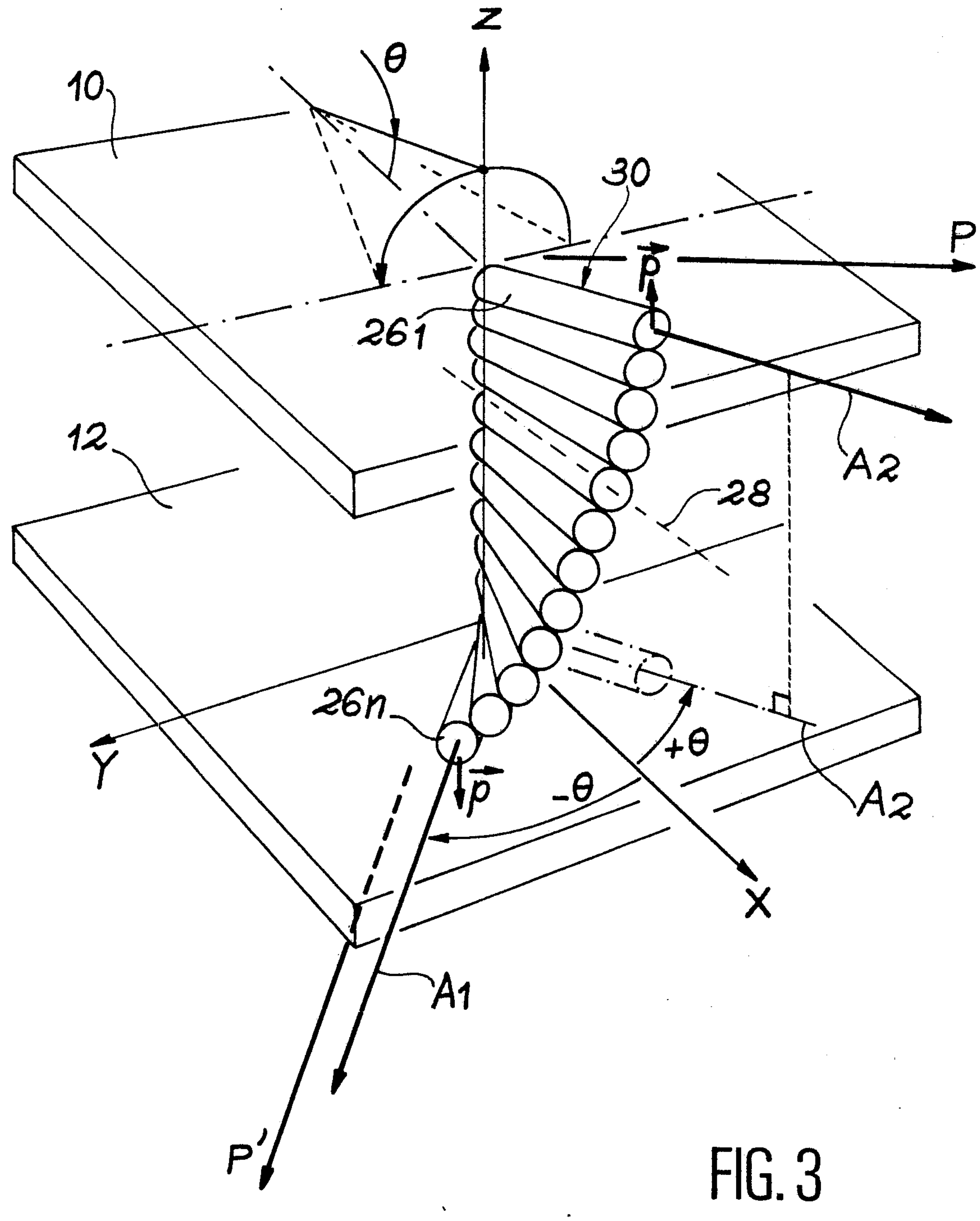


FIG. 3

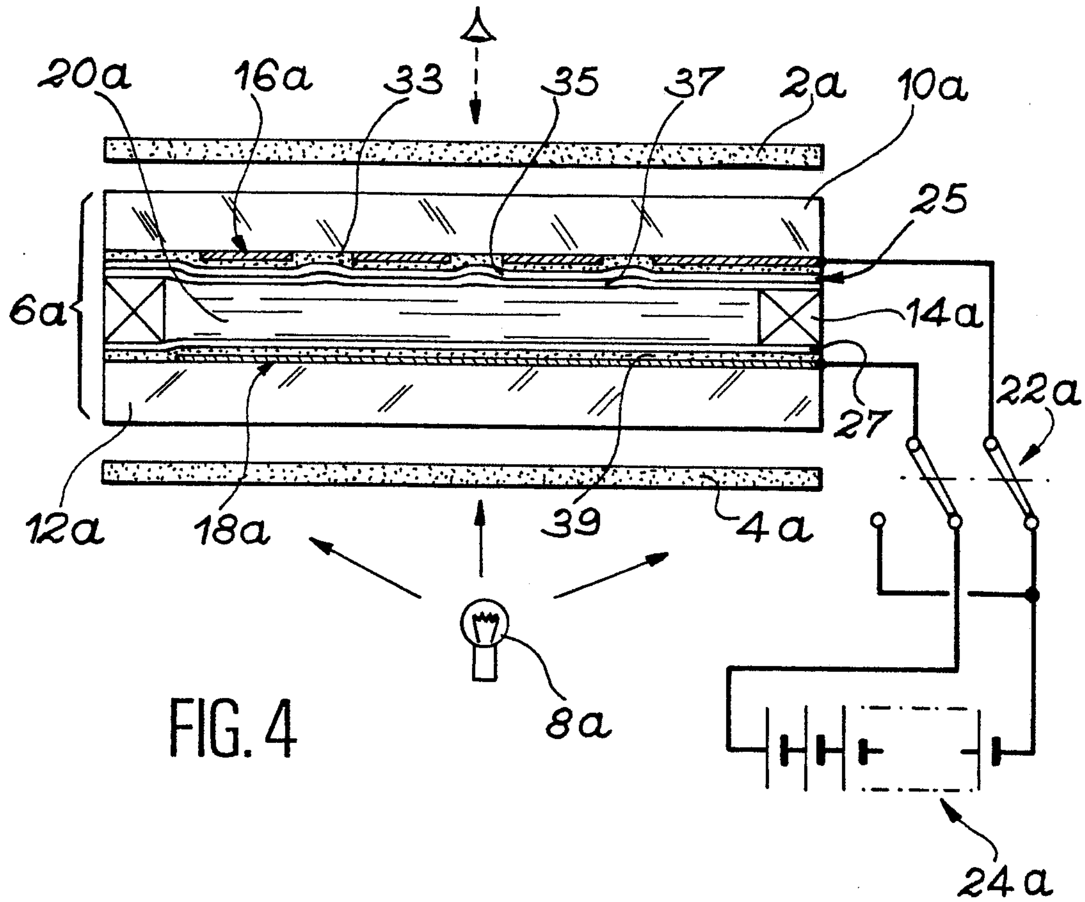
20a
16a
33
35
37
2a
10a
25
6a
14a
22a
27
12a
18a
39
4a
8a
24a

FIG. 4

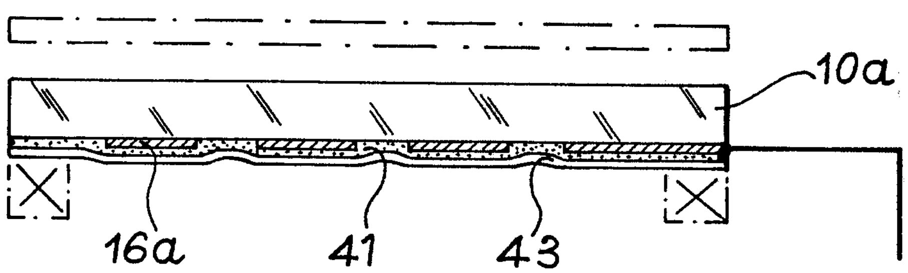
10a
16a
41
43

FIG. 6

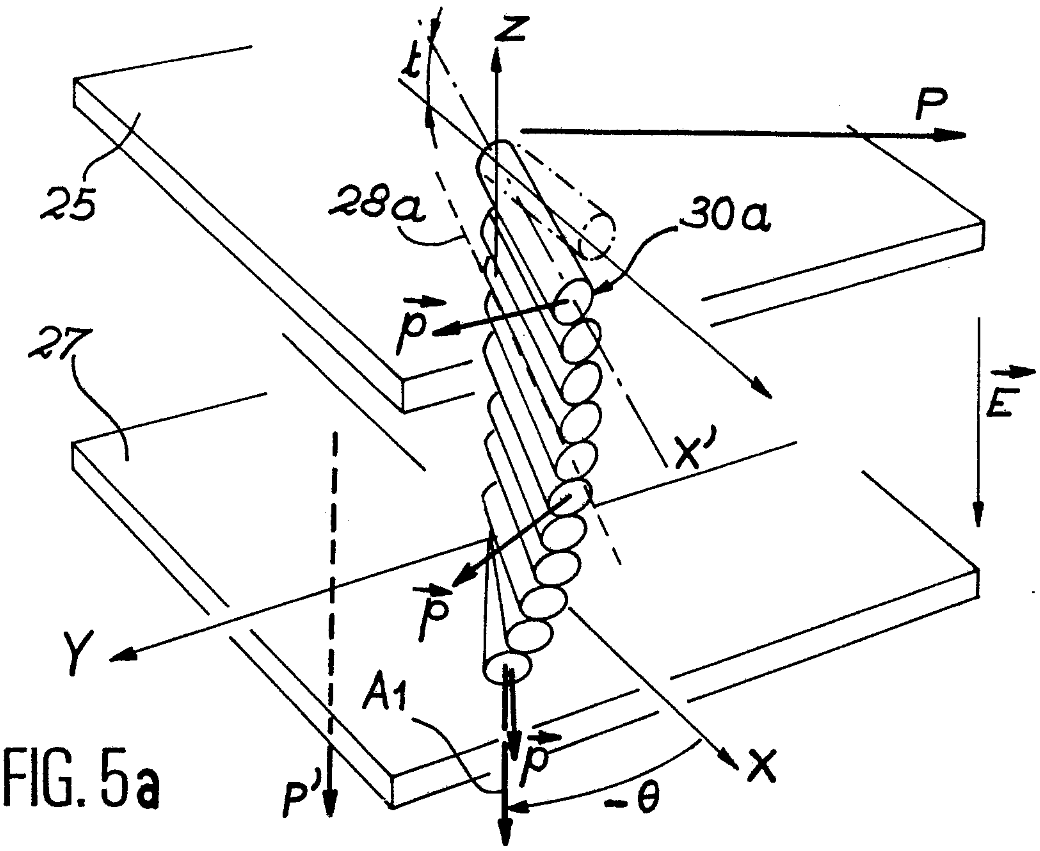

Z
t
P
25
28a
30a
27
p
E
X'
p
Y
A1
p
X
P'
-θ


FIG. 5a

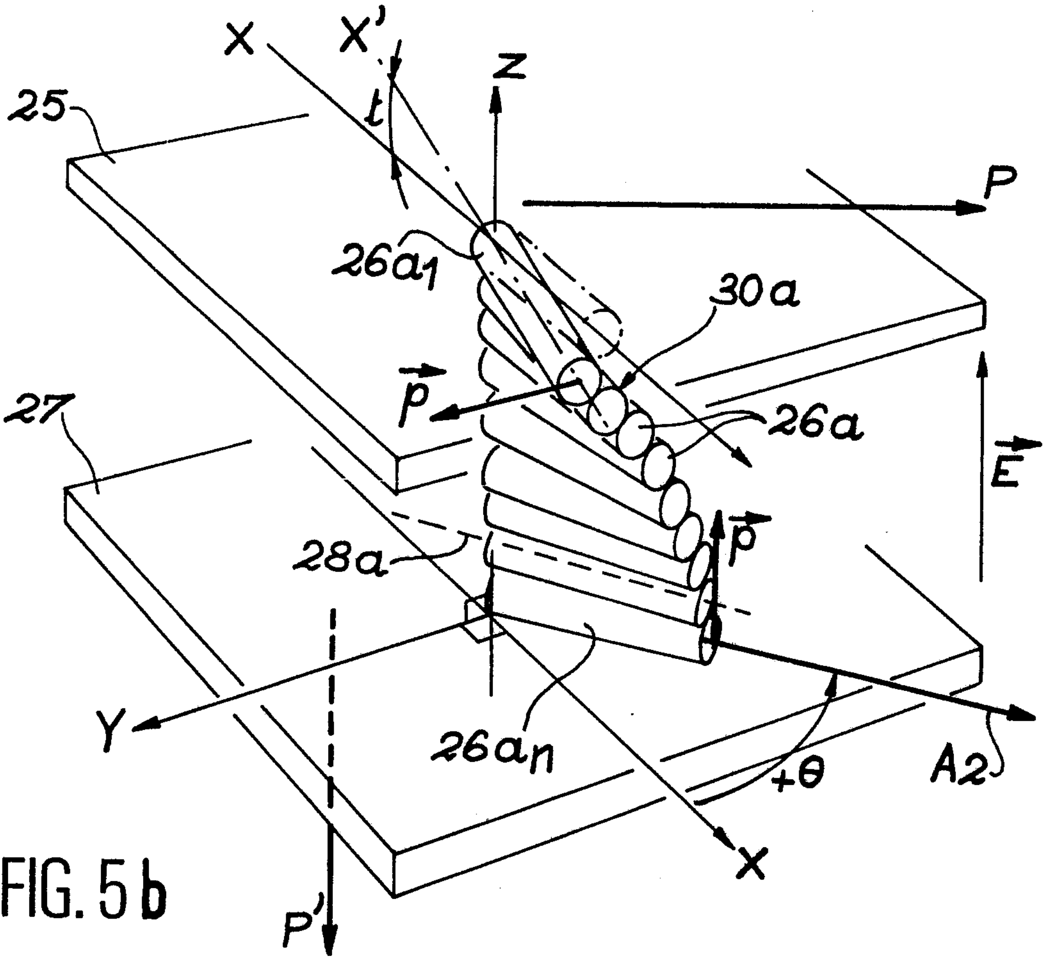

X
X'
Z
t
25
P
26a1
30a
p
26a
E
27
28a
p
Y
26an
+θ
A2
X
P'


FIG. 5b

Office européen des brevets

# RAPPORT DE RECHERCHE EUROPEENNE

Numero de la demande

EP 88 40 0837

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | EP-A-0 168 242 (SEIKO INSTRUMENTS & ELECTRONICS)<br>* Résumé; page 4, ligne 10 - page 5, ligne 10; page 9, lignes 2,3; page 12, ligne 27 - page 13, ligne 3 * | 1-14 | G 02 F 1/137<br>G 02 F 1/133 |
| A | EP-A-0 203 569 (HOSIDEN ELECTRONICS CO.)<br>* Résumé * | 1 | |
| A | WO-A-8 606 506 (AMERICAN TELEPHONE & TELEGRAPH CO.)<br>* Résumé * | 1 | |
| D,A | EP-A-0 032 362 (S.Y.T. LAGERWALL et al.) | | |
| A | EP-A-0 184 487 (C.E.A.)<br>& FR-A-2 573 548 (Cat. D) | | |
| A | US-A-4 563 059 (N.A. CLARK et al.) | | |

DOMAINES TECHNIQUES RECHERCHES (Int. Cl.4)

G 02 F

Le présent rapport a été établi pour toutes les revendications

| Lieu de la recherche | Date d'achèvement de la recherche | Examinateur |
|---|---|---|
| LA HAYE | 19-07-1988 | GALANTI M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)